# EUROPÄISCHE PATENTSCHRIFT

(11) **EP 4 175 139 B1**
(45) Veröffentlichungstag und Bekanntmachung des Hinweises auf die Patenterteilung: **31.07.2024**
(21) Anmeldenummer: 22203985.1
(22) Anmeldetag: 27.10.2022
(51) Int. Cl.: H02K 15/04, B21F 1/00, B21F 1/04

(54) **VORRICHTUNG UND VERFAHREN ZUM HERSTELLEN EINER BIEGUNG EINER WELLENWICKLUNG FÜR EINE SPULENWICKLUNG EINER ELEKTRISCHEN MASCHINE**
DEVICE AND METHOD FOR PRODUCING A BEND OF A WAVE WINDING FOR A COIL WINDING OF AN ELECTRIC MACHINE
DISPOSITIF ET PROCÉDÉ DE FABRICATION D'UNE FLEXION D'UN ENROULEMENT ONDULÉ POUR UN ENROULEMENT DE BOBINE D'UNE MACHINE ÉLECTRIQUE

(30) Priorität: 01.11.2021 DE 102021128410
(43) Veröffentlichungstag der Anmeldung: 03.05.2023
(73) Patentinhaber: Aumann Espelkamp GmbH, 32339 Espelkamp (DE)
(72) Erfinder: Lüttge, Wolfgang, 31787 Hameln (DE); Dunker, Alexander, 32351 Sternwede-Drohne (DE)
(74) Vertreter: Bittner, Thomas L.

(56) Entgegenhaltungen:
- DE-A1- 102016 203 167
- DE-A1- 102017 127 634
- JP-A- 2009 213 199
- KR-A- 20150 093 992
- US-A- 2 963 048

## Beschreibung

Die Erfindung betrifft eine Vorrichtung sowie ein Verfahren zum Herstellen einer Biegung einer Wellenwicklung für eine Spulenwicklung einer elektrischen Maschine.

### Hintergrund

Eine Spulenwicklung für einen Rotor oder einen Stator einer elektrischen Maschine kann mit Hilfe einer Wellenwicklung ausgebildet werden. Hierbei wird ein Draht oder ein Drahtmaterial mittels einer Biegevorrichtung gebogen, so dass das gebogene oder umgeformte Drahtmaterial ähnlich einer Welle verläuft. Die Vorrichtung zum Biegen verfügt über Biegeelemente, die zum Herstellen der Biegung verlagert werden, um so das ursprüngliche Drahtmaterial zur Wellenwicklung umzuformen

Im Dokument WO 2019 / 101 272 A1 sind eine Vorrichtung und ein Verfahren zum Biegen einer Biegung einer Wellenwicklung für eine Spulenwicklung einer elektrischen Maschine offenbart, wobei eine Biegeeinheit ein erstes Halteelement zum Halten eines ersten Segments eines zu biegenden Drahts, ein zweites Halteelement zum Halten eines zweiten Segments des zu biegenden Drahts und wenigstens eine Biegeform zum Biegen eines Übergangsbereichs des Drahts zwischen dem ersten Segment und dem zweiten Segment aufweist. Das erste und das zweite Halteelement sind über wenigstens eine mechanische Steuerkurve miteinander im Eingriff zum Steuern einer Relativverschwenkung und einer Relativverschiebung des ersten und des zweiten Halteelements. In einer Biegeeinrichtung können mehrere solcher Biegeeinheiten vorgesehen sein.

Im Dokument WO 2016 / 033 028 A1 ist eine Vorrichtung zum Biegen eines Drahtmaterials offenbart, bei der auf gegenüberliegenden Seiten angeordnete Biegeelemente zum Herstellen einer Wellenwicklung mittels einer Linearbewegung quer zur Längsrichtung eines zu biegenden Drahts sowie mittels einer weiteren Linearbewegung in Längsrichtung des zu biegenden Drahts verlagert werden. Ein weiteres Verfahren zum Herstellen einer Wellenwicklung mittels überlagernder Linearbewegungen ist im Dokument US 7,624,768 B2 offenbart.

Auch Dokument WO 2010 / 079 548 A1 offenbart eine Vorrichtung zum Biegen einer Wellenwicklung.

Dokument DE 10 2016 203 167 A1 betrifft eine Vorrichtung zum Herstellen eines wellenförmig gebogenen Drahtsegments, insbesondere für die Verwendung als Statorwicklung in einer elektrischen Maschine, mit einer Linearführung und mit mehreren Formwerkzeugen, die längsverschieblich und drehbar an der Linearführung gelagert sind und die jeweils einen Aufnahmebereich zur Fixierung des zu biegenden Drahtsegments aufweisen. Die Formwerkzeuge sind gegensinnig verdrehbar und gleichzeitig entlang der Linearführung zusammenfahrbar, um das daran fixierte Drahtsegment in eine Wellenform biegen zu können.

Das Dokument JP 2009-213199 A offenbart ein Verfahren zur Herstellung einer wellengewickelten Spule für Statoren. In einem Spulenmaterial zur Herstellung einer wellengewickelten Spule gewickelten Spule wird ein eine Endseite bildender Abschnitt mit einer Endseiten-Klemme geklemmt, und auch ein die andere Endseite bildender Abschnitt wird mit einer anderen Endseiten-Klemme geklemmt. Spulenendleiter werden aus den Endseiten bildenden Abschnitten gebildet, indem die Klemmen entlang einer Kreisbahn relativ nahe zueinander gebracht werden, wobei der parallele Zustand zwischen den Klemmen beibehalten wird, wodurch sie miteinander in Eingriff kommen und ein Schlitzteil zwischen den Endseiten bildenden Abschnitten gebildet wird.

Aufgabe der Erfindung ist es, eine Vorrichtung und ein Verfahren zum Herstellen einer Biegung einer Wellenwicklung für eine Spulenwicklung einer elektrischen Maschine anzugeben, die es ermöglichen, einen zu biegenden Draht effizient zu einer Biegung für eine Wellenwicklung zu biegen.

Zur Lösung ist eine Vorrichtung zum Herstellen einer Biegung einer Wellenwicklung für eine Spulenwicklung einer elektrischen Maschine nach dem unabhängigen Anspruch 1 geschaffen. Weiterhin ist ein Verfahren zum Herstellen einer Biegung einer Wellenwicklung für eine Spulenwicklung einer elektrischen Maschine nach dem nebengeordneten Anspruch 13 geschaffen. Ausgestaltungen sind Gegenstand von abhängigen Unteransprüchen.

Nach einem Aspekt ist eine Vorrichtung zum Herstellen einer Biegung oder geometrischen Kontur einer Wellenwicklung für eine Spulenwicklung einer elektrischen Maschine geschaffen, die eine erste Anordnung erster Biegeelemente sowie eine zweite Anordnung zweiter Biegeelemente aufweist. Bei der ersten Anordnung erster Biegeelemente sind die Biegeelemente jeweils um eine erste Schwenkachse schwenkbar gelagert, weisen einen in Bezug auf die erste Schwenkachse distalen ersten Biegekopf auf und sind nach einem Einführen und vor einem Biegen eines Drahtmaterials oder Drahts in Längsrichtung des Drahtmaterials auf einer Seite des Drahtmaterials in einer jeweiligen ersten Ausgangsstellung angeordnet. Bei der zweiten Anordnung sind die zweiten Biegeelementen jeweils um eine zweite Schwenkachse schwenkbar gelagert und weisen einen in Bezug auf die zweite Schwenkachse distalen zweiten Biegekopf auf und sind nach dem Einführen und vor dem Biegen des Drahtmaterials in Längsrichtung des Drahtmaterials auf einer gegenüberliegenden Seite des Drahtmaterials in einer jeweiligen zweiten Ausgangsstellung angeordnet. Zum Herstellen einer Biegung einer Wellenwicklung für eine Spulenwicklung sind die ersten Biegeelemente aus der ersten Ausgangsstellung von der einen Seite zum eingeführten Drahtmaterial hin in eine erste Biegestellung und die zweiten Biegeelemente aus der zweiten Ausgangsstellung von der gegenüberliegenden Seite zum eingeführten Drahtmaterial hin in eine zweite Biegestellung schwenkbar. Die ersten und die zweiten Biegeelemente bilden nach dem jeweiligen Schwenken in die erste und die zweite Biegestellung in der Längsrichtung eine Anordnung benachbarter geschwenkter Biegeelementen, in welcher das zur Wellenwicklung gebogene Drahtmaterial um die ersten und die zweiten Biegeköpfe sowie zwischen benachbarten Biegeelementen verläuft.

Nach einem weiteren Aspekt ist ein Verfahren zum Herstellen einer Biegung oder geometrischen Kontur einer Wellenwicklung für eine Spulenwicklung einer elektrischen Maschine geschaffen, wobei das Verfahren Folgendes aufweist: Bereitstellen einer Biegevorrichtung mit ersten Biegeelementen, die jeweils um eine erste Schwenkachse schwenkbar gelagert sind und einen in Bezug auf die erste Schwenkachse distalen ersten Biegekopf aufweisen sowie zweiten Biegeelementen, die jeweils um eine zweite Schwenkachse schwenkbar gelagert sind und einen in Bezug auf die zweite Schwenkachse distalen zweiten Biegekopf aufweisen; Einführen eines Drahtmaterials oder Drahts; Anordnen der ersten Biegeelemente in Längsrichtung des Drahtmaterials auf einer Seite des Drahtmaterials in einer jeweiligen ersten Ausgangsstellung; Anordnen der zweiten Biegeelemente in Längsrichtung des Drahtmaterials auf einer gegenüberliegenden Seite des Drahtmaterials in einer jeweiligen zweiten Ausgangsstellung und Herstellen einer Biegung einer Wellenwicklung für eine Spulenwicklung. Bei dem Herstellen der Biegung ist weiterhin Folgendes vorgesehen: Schwenken der ersten Biegeelemente aus der ersten Ausgangsstellung von der einen Seite zum eingeführten Drahtmaterial hin in eine erste Biegestellung und Schwenken der zweiten Biegeelemente aus der zweiten Ausgangsstellung von der gegenüberliegenden Seite zum eingeführten Drahtmaterial hin in eine zweite Biegestellung, wobei mit den ersten und den zweiten Biegeelementen nach dem jeweiligen Schwenken in die erste und die zweite Biegestellung in der Längsrichtung eine Anordnung benachbarter geschwenkter Biegeelementen ausgebildet wird, in welcher das zur Wellenwicklung gebogene Drahtmaterial um die ersten und die zweiten Biegeköpfe sowie zwischen benachbarten Biegeelementen verläuft.

Die Vorrichtung und das Verfahren ermöglichen es, das Drahtmaterial zum Herstellen der geometrischen Kontur oder Biegung (Biegekontur) für die Wellenwicklung auf effiziente Art und Weise mittels Biegen umzuformen. Beim Verschwenken der Biegeelemente in die Biegestellung kommen diese Stück für Stück weiter mit dem Drahtmaterial in Kontakt, insbesondere im Bereich des jeweiligen Biegekopfes, was für das Drahtmaterial eine materialschonende Verarbeitung unterstützt.

Die Anzahl von ersten oder zweiten Biegeelementen, die zum Beispiel jeweils mit einer Biegebacke gebildet sein können, in der jeweiligen Anordnung kann je nach Anwendungsfall (Anzahl der zu biegenden Wellen) gewählt werden.

Zumindest eine der folgenden Ausgestaltungen kann ausgebildet sein: für die ersten Biegeelemente der ersten Anordnung ist ein erster Achsenabstand zwischen ersten Schwenkachsen benachbarter erster Biegeelemente gleichbleibend beim Verlagern der ersten Biegeelemente aus der ersten Ausgangsstellung in die erste Biegestellung; und für die zweiten Biegeelemente der zweiten Anordnung ist ein zweiter Achsenabstand zwischen zweiten Schwenkachsen benachbarter zweiter Biegeelemente gleichbleibend beim Verlagern der zweiten Biegeelemente aus der zweiten Ausgangsstellung in die zweite Biegestellung. Werden die jeweiligen Biegeelemente aus der Ausgangsstellung mittels Schwenken in die Biegestellung verlagert, verbleibt der Abstand der jeweiligen Schwenk- oder Drehachsen unverändert. Ergänzend kann vorgesehen sein, dass die Relativlage für die Schwenkachsen der ersten und / oder der zweiten Anordnung beim Verschwenken zwischen Ausgangsstellung und Biegestellung jeweils unverändert bleibt.

In der nach dem jeweiligen Schwenken in die Biegestellung gebildeten Anordnung von benachbarten geschwenkten Biegeelemente können die ersten und die zweiten Biegeelemente abwechselnd angeordnet sein. Eine solche Anordnung kann ausgebildet werden, indem die ersten und die zweiten Biegeelemente von den gegenüberliegenden Seiten abwechselnd in die jeweilige Biegestellung verlagert werden. Auf diese Weise wird die Anordnung benachbarter geschwenkter Biegeelemente dann so ausgebildet, dass in Längsrichtung (des ungebogenen Drahts) auf ein jeweiliges erstes Biegeelement ein jeweiliges zweites Biegeelement folgt. Alternativ kann vorgesehen sein, dass von der ersten oder der zweiten Anordnung aufeinanderfolgend wenigstens zwei Biegeelemente in die zugeordnete Biegestellung verlagert werden, worauf dann ein oder mehrere Biegeelemente von der gegenüberliegenden Anordnung von Biegeelementen eingeschwenkt werden.

In der Anordnung der benachbarten geschwenkten Biegeelemente können die ersten und die zweiten Biegeelemente im Wesentlichen quer stehend zur Längsrichtung angeordnet sein. Die ersten und die zweiten Biegeelemente können hierbei mit ihrer Längsrichtung quer zur Längsrichtung des Drahtmaterials (vor dem Biegen) angeordnet sein. Bei den Biegeelementen erstreckt sich die Längsrichtung beispielsweise entlang einer Verbindungslinie zwischen der Lagerung an der zugeordneten Schwenkachse oder einem Bereich mit dieser Lagerung und einem mittleren Abschnitt des Biegekopfes des Biegeelements.

Die ersten und die zweiten Biegeelemente können zum Verlagern aus der jeweiligen Biegestellung mittels einer Linearbewegung verlagerbar sein. Hierbei kann die Bewegungsrichtung der Linearbewegung zum Beispiel quer oder schräg zur Längsrichtung des Drahtmaterials vor dem Biegen verlaufen. Das Verlagern mittels der Linearbewegung ermöglicht es in einer Ausgestaltung die erste und die zweite Anordnung mit den jeweiligen Biegeelementen vom gebogenen Drahtmaterial (Wellenwicklung) wegzubewegen, so dass die Wellenwicklung freigegeben wird und aus der Vorrichtung zum Biegen herausgenommen werden kann. Es kann vorgesehen sein, dass alle ersten Biegeelemente der ersten Anordnung und / oder alle zweiten Biegeelemente der zweiten Anordnung als jeweilige Gruppe von Biegeelementen gemeinsam mittels der Linearbewegung verlagerbar sind. Alternativ oder ergänzend kann vorgesehen sein, dass die ersten und / oder die zweiten Biegeelemente einzeln oder in Teilgruppen mittels Linearbewegung verlagerbar sind, insbesondere vom gebogenen Draht weg.

In der Anordnung der benachbarten geschwenkten Biegeelemente können einander gegenüberliegende Oberflächenabschnitte erster und zweiter Biegeelemente unter Einschluss eines dazwischenliegenden Drahtabschnitts des Drahtmaterials zumindest abschnittsweise formschlüssig (aneinander) anliegen. Wenigstens abschnittsweise ist im Bereich der einander gegenüberliegenden Oberflächenabschnitte erster und zweiter Biegeelemente unter Einschluss eines Drahtabschnitts des Drahtmaterials ein Formschluss ausgebildet. Hierbei liegt der Abschnitt des Drahtmaterials sowohl am Oberflächenabschnitt des ersten Biegeelementes wie auch an einem Oberflächenabschnitt des gegenüberliegenden zweiten Biegeelements an.

Das zur Wellenwicklung gebogene Drahtmaterial kann in der Anordnung benachbarter geschwenkter Biegeelemente in einem Drahtkanal angeordnet sein, welcher entlang seiner gesamten Kanallänge in der Anordnung benachbarter geschwenkter Biegeelemente im Wesentlichen durchgehend von den ersten und den zweiten Biegeelementen begrenzt wird. Das gebogene Drahtmaterial verläuft hier entlang des Drahtkanals, welcher sich (in Wellenform) zum Beispiel in Längsrichtung des Drahtmaterials vor dem Biegen erstreckt. Zumindest auf zwei einander gegenüberliegenden Kanalseiten ist der Drahtkanal durch die Oberflächenabschnitte der geschwenkten Biegeelemente begrenzt.

Zum Nachbiegen des Drahtmaterials können zumindest die ersten Biegeköpfe der ersten Biegeelemente mittels einer Linearbewegung in Längsrichtung des jeweiligen ersten Biegeelements zum Drahtmaterial hin verlagerbar sein. Nachdem die ersten und die zweiten Biegeelemente in die jeweilige Biegestellung geschwenkt sind, kann ein Nachbiegen dahingehend stattfinden, das erste und / oder zweite Biegeköpfe mittels der Linearbewegung in Längsrichtung des jeweiligen Biegeelements (mittels eines zugeordneten Aktors) verlagert werden, um so das Biegen des Drahtmaterials in eine gewünschte Endform zu unterstützen. Hierbei kann vorgesehen sein, dass die Biegeelemente mit einem Lagerspiel an der Schwenkachse gelagert sind, welches es ermöglicht, mit Hilfe eines zugeordneten Aktors das geschwenkte Biegeelement in Linearrichtung zu bewegen. Alternativ oder ergänzend kann vorgesehen sein, dass ein in Bezug auf die Schwenkachse distaler Teilabschnitt des Biegeelements, an welchem der Biegekopf angeordnet ist, gegenüber einem proximalen Teilabschnitt des Biegeelements ausfahrbar oder verlagerbar ist, um hierdurch die Linearbewegung zum Nachbiegen des Drahtmaterials auszuführen. Hierzu können der distale und der proximale Teilabschnitt des Biegeelements beispielsweise über eine Linearführung oder -kopplung miteinander verbunden sein, welche eine Relativverlagerung zwischen den Teilabschnitten ermöglicht. Die erste und / oder die zweite Anordnung von Biegeelementen kann eingerichtet sein, die Linearbewegung für alle zugeordneten Biegeelemente gemeinsam auszuführen. Alternativ oder ergänzend kann vorgesehen sein, dass die Biegeelemente der Anordnungen jeweils eingerichtet sind, einzeln oder in ausgewählten Gruppen linear bewegt zu werden.

Eine erste Biegeelementlänge des ersten Biegeelementes und / oder eine zweite Biegeelementlänge des zweiten Biegeelementes können einstellbar oder veränderbar sein. Mit Hilfe des Einstellens der Biegeelementlänge ist es ermöglicht, die Vorrichtung an unterschiedliche Herstellungsprozesse anzupassen, bei denen Biegungen für Wellenwicklungen mit unterschiedlicher Stranglänge (gerader Abschnitt des Drahtmaterials zwischen auf gegenüberliegenden Seiten gebogenen Abschnitten). So können Wellenwicklungen für unterschiedliche Stator- oder Rotorlängen hergestellt werden. Das jeweilige Biegeelement kann hierzu mit mehreren Elementbauteilen (mehrteilig) ausgebildet sein, die relativ zueinander in unterschiedliche Verlagerungsstellungen verlagerbar sind, zum Beispiel mittels einer Linearführung, und in den Verlagerungsstellungen jeweils relativ zueinander fixierbar sind, um so die Biegeelementlänge zu variieren. Die Biegeelementlänge ist beispielsweise in Längsrichtung des Biegeelements zu bestimmen.

Bei der Vorrichtung kann Folgendes vorgesehen sein: entlang der ersten Schwenkachsen sind jeweils mehrere erste Biegeelemente übereinander und um die zugeordnete erste Schwenkachse schwenkbar angeordnet und entlang der zweiten Schwenkachsen sind jeweils mehrere zweite Biegeelemente übereinander und um die zugeordnete zweite Schwenkachse schwenkbar angeordnet. Auf diese Weise ist es ermöglicht, mehrere Lagen, die jeweils als eine Biegung für eine Wellenwicklung ausgebildet sind, in der gleichen Vorrichtung zum Biegen herzustellen, insbesondere gleichzeitig oder aufeinanderfolgend in einem einheitlichen Herstellungsprozess. Die übereinander angeordneten Biegeelemente können gemeinsam oder einzeln (auch in Teilgruppen) zwischen der Ausgangsstellung und der Biegestellung schwenkbar sein. Die übereinander oder entlang der Schwenkachse nebeneinander angeordneten Biegeelemente können hinsichtlich der äußeren Form gleich oder verschieden sein, beispielsweise mit gleich oder unterschiedlich geformtem Biegekopf.

Der ersten Anordnung erster Biegeelemente und der zweiten Anordnung zweiter Biegeelemente kann zumindest einseitig eine an die erste und die zweite Anordnung seitlich angrenzende und diese flächig erfassende Deckplatte zugeordnet sein. Eine jeweilige solche Deckplatte kann auf den beiden gegenüberliegenden Seiten vorgesehen sein. In einer Ausgestaltung kann mittels der einen oder der beiden Deckplatten der Drahtkanal ergänzend begrenzt sein. Mittels der mindestens einen Deckplatte kann in einer Ausführung eine Führungshilfe für das Drahtmaterial, insbesondere bei Hochkantdraht, und / oder die Biegeelemente beim Verschwenken zwischen der Ausgangsstellung und der Biegestellung ausgebildet sein.

In Bezug auf die erste Anordnung erster Biegeelemente und die zweite Anordnung zweiter Biegeelemente kann endseitig ein Startdrahtkonturgeber angeordnet sein, welcher eingerichtet ist, an dem Drahtmaterial endseitig eine Startdrahtkontur auszubilden und das Drahtmaterial nach dem Einführen zu halten. Alternativ können mehrere Startdrahtkonturgeber vorgesehen sein. Mit Hilfe des oder der Startdrahtkonturgeber(s) wird ein (jeweiliger) Endabschnitt des Drahtmaterials oder Drahts der Startdrahtkontur entsprechend geformt (gebogen). Hierbei kann es sich um den Endabschnitt des Drahtmaterials handeln, welcher beim Einführen des Drahtmaterials in Einführrichtung voranlaufend ausgebildet ist. Der Startdrahtkonturgeber kann auf den beiden gegenüberliegenden Seiten des (noch ungebogenen) Drahtmaterials jeweilige Konturgeberbauteile aufweisen, die zum Ausbilden der Startdrahtkontur zum Drahtmaterial hin verlagert werden, um den Endabschnitt zu biegen und anschließend zu halten.

Bei diesen oder anderen Ausführungsformen kann das Drahtmaterial eingefügt werden, indem das Drahtmaterial unter Verwendung einer Greifeinrichtung von einem Drahtmaterialvorrat eingezogen wird, beispielsweise von einer Rolle. Beim Ausbilden der Startdrahtkontur kann vorgesehen sein, dass das Drahtmaterial von der Greifeinrichtung freigegeben wird. Falls eine solche Freigabe während der Ausbildung der Startdrahtkontur noch nicht erfolgt, kann dies im Anschluss hieran vorgesehen sein.

Das Verfahren zum Herstellen kann vorsehen, dass beim Schwenken der ersten Biegeelemente in die erste Biegestellung und / oder beim Schwenken der zweiten Biegeelemente in die zweite Biegestellung mittels der ersten und / oder der zweiten Biegeelemente weitere Abschnitte des Drahtmaterials in einen Bereich zwischen den ersten und den zweiten Biegeelementen eingezogen und gebogen werden. Wenn das jeweilige Biegeelement beim Schwenken zu der Biegestellung hin mit dem Drahtmaterial in Kontakt kommt und sich dieses hierbei im Bereich des Biegekopfes an das Biegeelement anlegt, führt das weitere Schwenken des Biegeelements zur Biegestellung hin bei dieser Ausführung dazu, dass ein weiterer Abschnitt des Drahtmaterials in den Bereich zwischen der ersten und der zweiten Anordnung von Biegeelementen eingeführt oder eingezogen wird. Ein solches Nachführen (zusätzliches Einziehen) des Drahtmaterials unterstützt ein materialschonendes Biegen des Drahtmaterials, welches auf diese Weise gar nicht oder in möglichst geringerem Umfang gestreckt wird.

Bedingt durch einen solchen Biegeablauf kann die jeweils für den nächsten Biegeabschnitt benötigte Drahtlänge durch die Schwenkbewegung des Biegeelementes in die Biegevorrichtung eingezogen. Aufgrund dieses schrittweisen Einzugs ist die Biegevorrichtung auch bei geringen Relativbewegungen zwischen Drahtmaterial und Biegeelementen sehr kompakt ausführbar. Durch das Schwenken des nächsten Biegeelements wird eine Biegekontur erzeugt, wobei eine geringe Relativbewegung zwischen Drahtmaterial und Biegeelement (zum Beispiel Biegebacke) vorliegt, was in der Vorrichtung beim Biegen eine geringe Drahtbelastung und eine geringste Baulänge für die Vorrichtung unterstützt. Ein Großteil der Drahtlänge, die zur Konturerzeugung benötigt wird, kann in gerader Form des Drahtmaterials in Drahtlaufrichtung durch die Vorrichtung gezogen werden.

Das Verfahren zum Herstellen kann weiterhin vorsehen, dass beim Schwenken der ersten und der zweiten Biegeelemente das Drahtmaterial zumindest im Bereich des jeweiligen ersten und zweiten Biegekopfes im Wesentlichen frei von einer Relativbewegung zwischen Abschnitten einer Biegekopfoberfläche und dem Drahtmaterial verarbeitet oder gebogen wird, nachdem das Drahtmaterial in einem jeweiligen Abschnitt der Biegekopfoberfläche zur Anlage kommt.

Das Vermeiden einer Relativbewegung zwischen dem Biegekopf und dem Drahtmaterial unterstützt weiter einen materialschonenden Biegeprozess.

Der ersten und der zweiten Anordnung von Biegeelementen können ein oder mehrere Aktoren zugeordnet sein, welche eingerichtet sind, die jeweiligen Biegeelemente zwischen der Ausgangsstellung und der Biegestellung zu verlagern. In einer Ausgestaltung ist ein der ersten Anordnung erster Biegeelemente zugeordneter erster Aktor vorgesehen, welcher eingerichtet ist, mittels einer Linearbewegung entlang der ersten Anordnung die ersten Biegeelemente aufeinanderfolgend aus der Ausgangsstellung in die Biegestellung zu verlagern. Vergleichbar kann der zweiten Anordnung zweiter Biegeelemente ein zweiter Aktor zugeordnet sein, der mittels Linearbewegung längs der zweiten Anordnung die zweiten Biegeelemente nacheinander aus der Ausgangsstellung in die Biegestellung verlagert. Hierbei kann ein an den ersten und an den zweiten Aktor koppelnde Steuereinrichtung eingerichtet sein, die Bewegung des ersten und des zweiten Aktors relativ zueinander so zu steuern, dass abwechselnd ein erstes und ein zweites Biegeelement aus der Ausgangsstellung in die Biegestellung verlagert werden. Eine solche Steuerung der Schwenkvorgänge für die Biegeelemente ist auch mit Hilfe alternativer Aktoren möglich, die beispielsweise den Biegeelementen individuell zugeordnet sind und diese jeweils betätigen, sei es mittels einer Linear- und / oder Schwenkbewegung des oder der Aktoren, um mittels der Aktorbewegung das Schwenken der Biegeelemente zu bewirken.

Die ersten und die zweiten Biegeelement können im Seitenbereich sowie im Bereich des jeweiligen Biegekopfs mit Führungsvertiefungen ausgebildet sein, zum Beispiel Nuten, die beim Herstellen der Biegung zur Führung des Drahtmaterials dienen.

Es können mehrere Biegungen einer Wellenwicklung für eine Spulenwicklung einer elektrischen Maschine gleichzeitig hergestellt werden, wobei mehrere Drähte oder Drahtmaterialien mit unterschiedlicher geometrischer Biegekontur gleichzeitig gebogen werden. Die Drähte oder Drahtmaterialien können vor dem Biegen zwischen den ersten und den zweiten Biegeelementen angeordnet werden, um dann gebogen zu werden. Die ersten und die zweiten Biegeelemente weisen hierzu jeweils erste und zweite Biegekonturen auf, die einander zugeordnet sind und beim Biegen zusammenwirken, um zum Beispiel eine erste und eine zweite Biegung mit unterschiedlicher geometrischer Kontur herzustellen.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Anordnung für eine Vorrichtung zum Herstellen einer Biegung einer Wellenwicklung für eine Spulenwicklung einer elektrischen Maschine, wobei ein zu biegendes Drahtmaterial eingeführt ist;
- Fig. 2: eine schematische Darstellung der Anordnung aus Fig. 1, wobei eine erste Anordnung erster Biegeelemente und eine zweite Anordnung zweiter Biegeelemente aufeinander zu bewegt sind;
- Fig. 3: eine schematische Darstellung der Anordnung aus Fig. 2 am Beginn eines Biegeprozesses;
- Fig. 4: eine schematische Darstellung der Anordnung aus Fig. 2 nach Beginn des Biegeprozesses;
- Fig. 5: eine schematische Darstellung der Anordnung aus Fig. 2 nach Fortführung des Biegeprozesses im Vergleich zu Fig. 4;
- Fig. 6: eine schematische Darstellung der Anordnung aus Fig. 2 nach weiterer Fortführung des Biegeprozesses im Vergleich zu Fig. 5;
- Fig. 7: eine schematische Darstellung der Anordnung aus Fig. 2 nach Abschluss des Biegeprozesses;
- Fig. 8: eine schematische Darstellung der Anordnung aus Fig. 2, wobei die Biegung aus dem Drahtmaterial für die Wellenwicklung zum Herausnehmen freigegeben wird;
- Fig. 9: eine schematische Darstellung einer weiteren Anordnung zum Herstellen einer Biegung einer Wellenwicklung für eine Spulenwicklung einer elektrischen Maschine mit einem endseitig angeordneten Startdrahtkonturgeber;
- Fig. 10: eine schematische Darstellung der weiteren Anordnung aus Fig. 9 nach dem Ausbilden einer endseitigen Startdrahtkontur;
- Fig. 11: eine schematische Darstellung einer anderen Anordnung für eine Vorrichtung zum Herstellen einer Biegung einer Wellenwicklung für eine Spulenwicklung einer elektrischen Maschine, welche für eine Fertigung mehrerer Lagen eingerichtet ist;
- Fig. 12: eine schematische Darstellung der anderen Anordnung aus Fig. 11 nach dem Biegen mehrerer Lagen;
- Fig. 13: eine schematische Darstellung einer alternativen Anordnung für eine Vorrichtung zum Herstellen einer Biegung einer Wellenwicklung für eine Spulenwicklung einer elektrischen Maschine mit längenverstellbaren Biegeelementen;
- Fig. 14: eine schematische Darstellung eines ersten und eines zweiten Biegeelements mit Führungsvertiefungen für das Drahtmaterial;
- Fig. 15: eine schematische Darstellung einer weiteren Anordnung für eine Vorrichtung zum Herstellen mehrerer Biegungen für eine jeweilige Wellenwicklung für eine Spulenwicklung einer elektrischen Maschine am Beginn eines Biegeprozesses;
- Fig. 16: eine schematische Darstellung der weiteren Anordnung aus Fig. 15 nach Fortführung des Biegeprozesses;
- Fig. 17: eine schematische Darstellung der weiteren Anordnung aus Fig. 15 nach Abschluss des Biegeprozesses und
- Fig. 18: eine schematische Darstellung der Anordnung aus Fig. 15, wobei die Biegung aus dem Drahtmaterial für die Wellenwicklung zum Herausnehmen freigegeben wird.

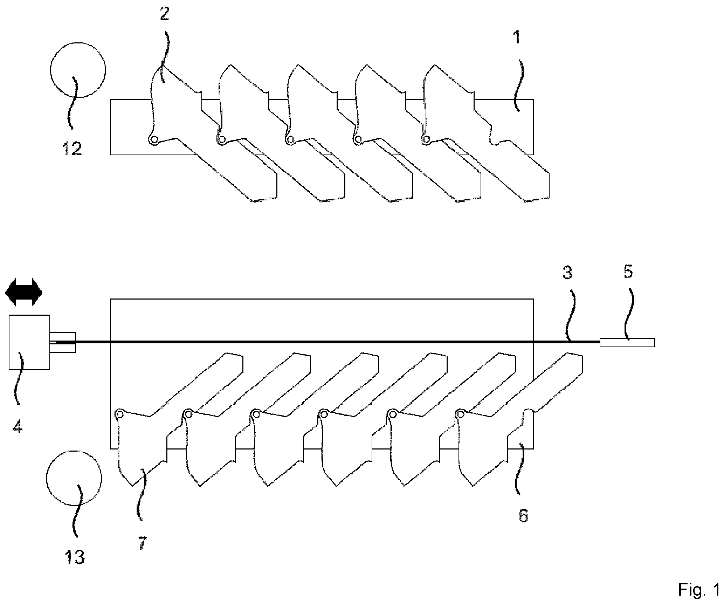

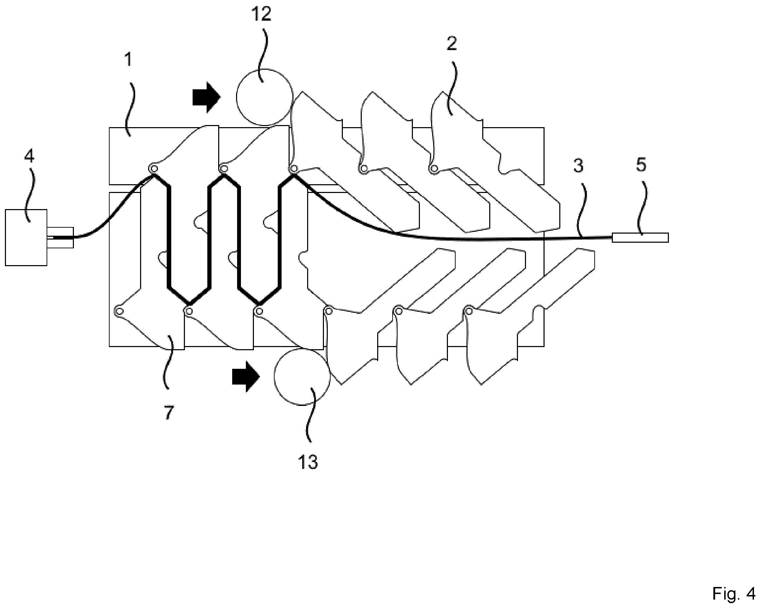

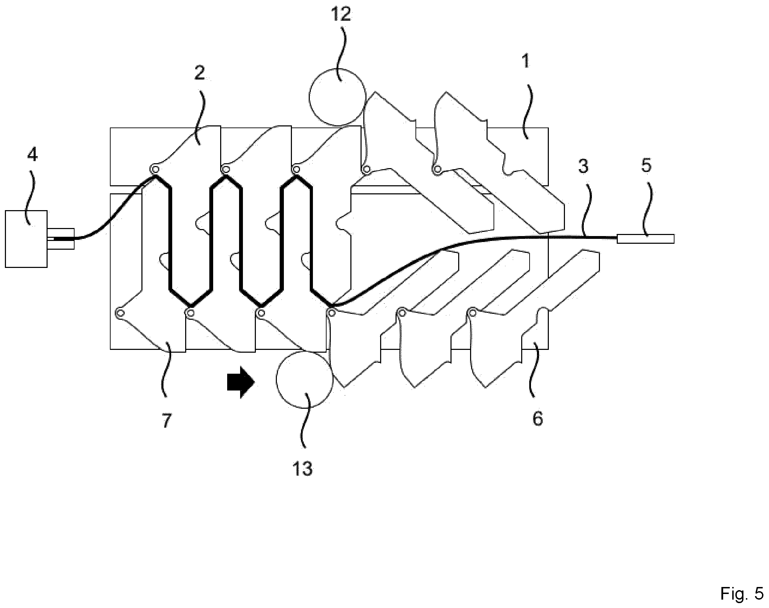

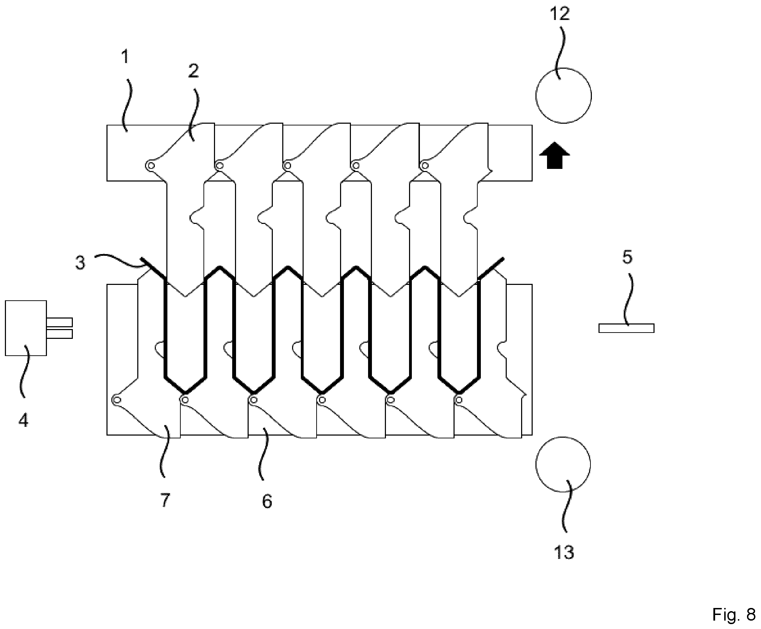

Fig. 1 bis 8 zeigen eine schematische Darstellung einer Anordnung für eine Vorrichtung zum Herstellen einer Biegung oder geometrischen Kontur einer Wellenwicklung für eine Spulenwicklung einer elektrischen Maschine. Eine erste Anordnung 1 mit ersten Biegeelementen 2 ist oberhalb eines Drahtmaterials oder Drahts 3 dargestellt, welches / welcher mit Hilfe einer Greifeinrichtung 4 von einem Drahtvorrat 5 eingezogen oder eingeführt wurde, derart, dass das Drahtmaterial 3 in Fig. 1 sich in einer Längsrichtung erstreckt.

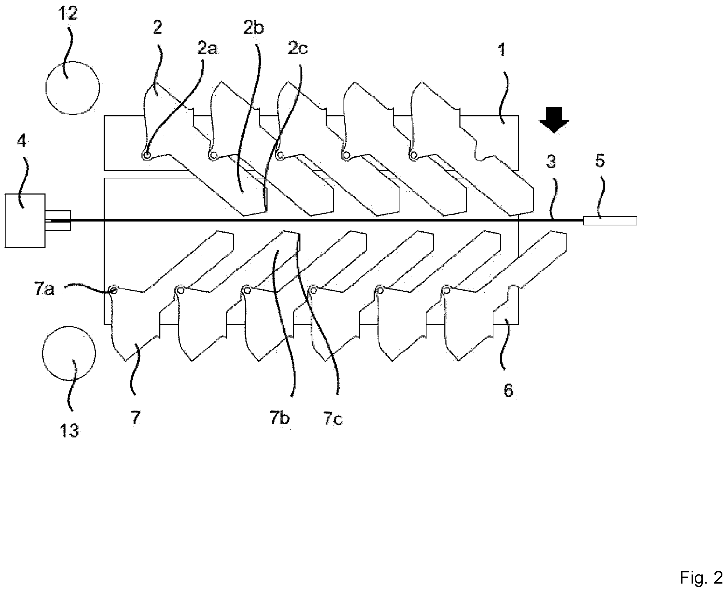

Unterhalb des Drahtmaterials 3 ist gemäß Fig. 1 eine zweite Anordnung 6 mit zweiten Biegeelementen 7 angeordnet. Vor dem Biegen des Drahtmaterials 3 (vgl. auch Fig. 2) sind die ersten und die zweiten Biegeelemente 2, 7 in einer jeweiligen ersten und zweiten Ausgangsstellung angeordnet, in welcher die ersten und die zweiten Biegeelemente 2, 7 mit dem Drahtmaterial 3, bei dem es sich beispielsweise um einen Flachdraht handelt, nicht in Kontakt sind. Die ersten und die zweiten Biegeelemente 2, 7 sind um eine jeweilige Schwenk- oder Drehachse 2a, 7a schwenkbar gelagert. In einem in Bezug auf die jeweilige Schwenkachse 2a, 7a distalen Teilabschnitt 2b, 7b ist ein Biegekopf 2c, 7c ausgebildet.

Zur Vorbereitung eines Biegeprozesses wird die erste Anordnung 1 mit den ersten Biegeelementen 2 gemäß Fig. 2 auf die zweite Anordnung 6 mit den zweiten Biegeelementen 7 hin zugestellt.

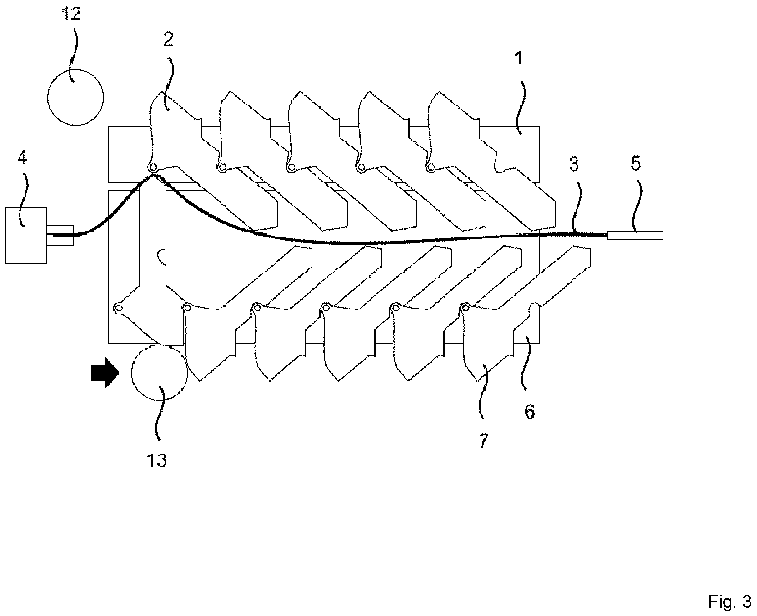

Sodann werden gemäß den Fig. 3 bis 6 die ersten und die zweite Biegeelemente 2, 7 aus ihrer jeweiligen Ausgangsstellung in eine jeweilige Biegestellung zu dem Drahtmaterial 3 hin verlagert, wobei hierbei das Drahtmaterial einer Wellenform entsprechend gebogen wird. In Fig. 3 ist ein erstes der zweiten Biegeelemente 7 vollständig in seine Biegestellung verlagert und steht dann in diesem Beispiel quer zur Längsrichtung des Drahtmaterials 3 vor dem Biegen in den Fig. 1 und 2. Die ersten und die zweiten Biegeelemente 2, 7 werden nacheinander abwechselnd in die zugeordnete Biegestellung verschwenkt. Hierbei werden weitere Abschnitte des Drahtmaterials 3 aus dem Drahtvorrat 5 eingezogen. Das Drahtmaterial 3 kommt beim Schwenken des ersten und des zweiten Biegeelements 2, 7 regelmäßig mit dem zugeordneten Biegekopf 2c, 7c in Kontakt, legt sich dann um diesen und wird beim fortgeführten Schwenken des Biegeelements weiter eingezogen.

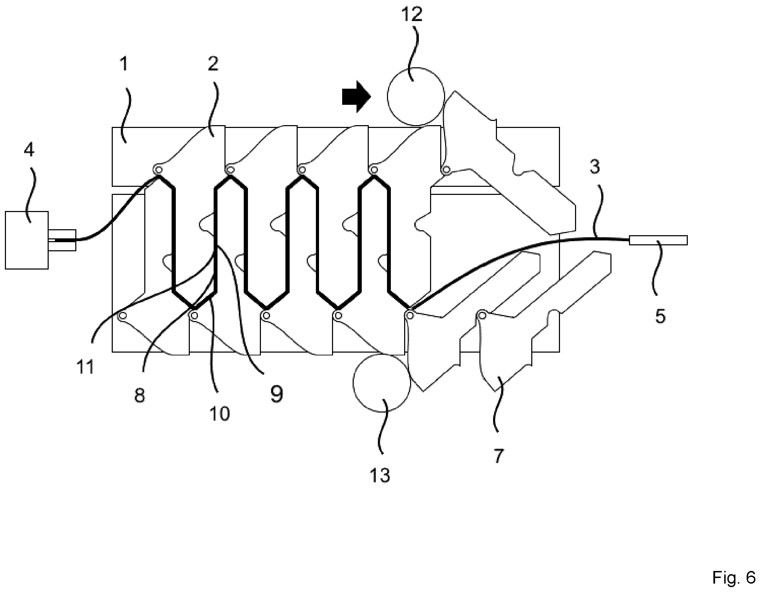

Gemäß Fig. 6 kommen hierbei Oberflächenabschnitte 8, 9 benachbarte Biegeelemente unter Einschluss eines Drahtabschnitts 10 des Drahtmaterials 3 formschlüssig zur Anlage, bei der dargestellten Ausführungsform sowohl in Seitenbereichen 11 wie auch im Bereich des jeweiligen Biegekopfs 2c, 7c.

Zum Verschwenken der ersten und der zweiten Biegeelemente 2, 7 in die jeweilige Biegestellung sind ein erster und ein zweiter Aktor 12, 13 vorgesehen, die der jeweiligen Anordnung von Biegeelementen zugeordnet sind. Der erste und der zweite Aktor 12, 13 sind allgemein eingerichtet, die ersten und die zweiten Biegeelemente 2, 7 aus der Ausgangsstellung in die Biegestellung zu verlagern. Bei der dargestellten Ausführungsform sind der erste und der zweite Aktor 12, 13 beispielhaft mit einer jeweiligen Rolle gebildet, die längs der ersten und der zweiten Anordnung 1, 2 versetzt zueinander bewegt werden, um das Schwenken der ersten und der zweiten Biegeelemente 2, 7 zu bewirken.

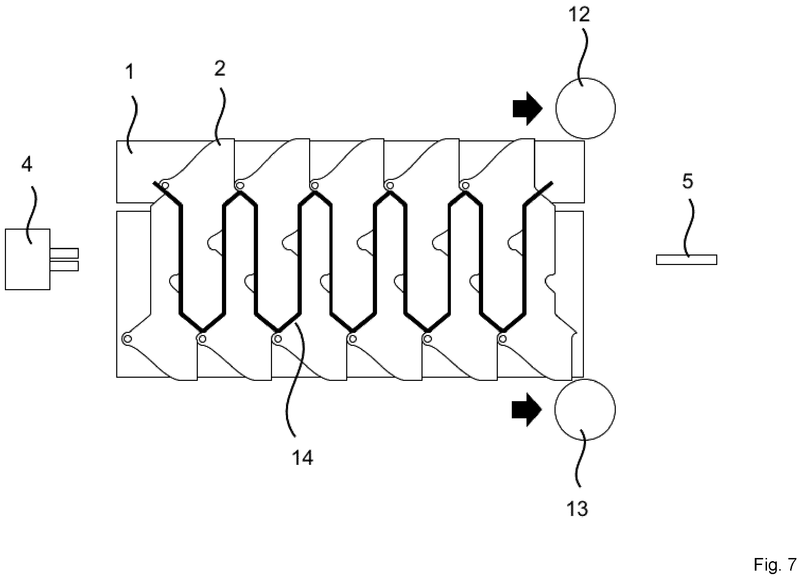

Gemäß Fig. 7 verläuft das Drahtmaterial 3 nach dem Biegen in einem Drahtkanal 14, welcher auf gegenüberliegenden Seiten des Drahtkanals 14 durch die ersten und die zweiten Biegeelemente 2, 7 begrenzt ist.

Es kann vorgesehen sein, dass die ersten und / oder die zweiten Biegeelemente 2, 7 an der zugeordneten Schwenkachse 2a, 7a mit einem Lagerspiel gelagert sind, welches es ermöglicht, die ersten und / oder die zweiten Biegeelemente 2, 7 nach dem Schwenken in die jeweilige Biegestellung (vgl. Fig. 7) in Querrichtung zur Längsrichtung des nicht gebogenen Drahtmaterials 3 (vgl. Fig. 1 und 2) mittels Linearbewegung zu verlagern, um so die Ausbildung der Biegeform im Bereich des jeweiligen Biegekopfes 2a, 7a weiter zu unterstützen. Hierzu können die Biegeelemente 2, 7 mittels eines oder mehrerer zugeordneter Aktoren (nicht dargestellt) betätigt werden.

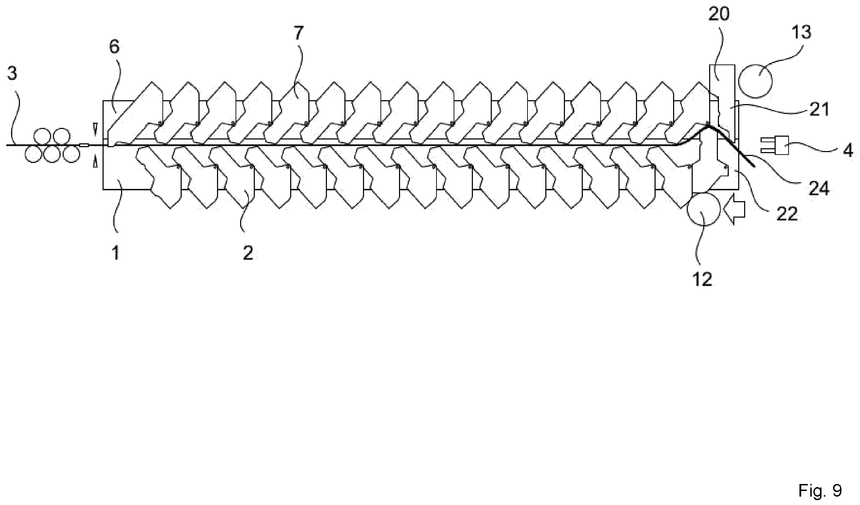

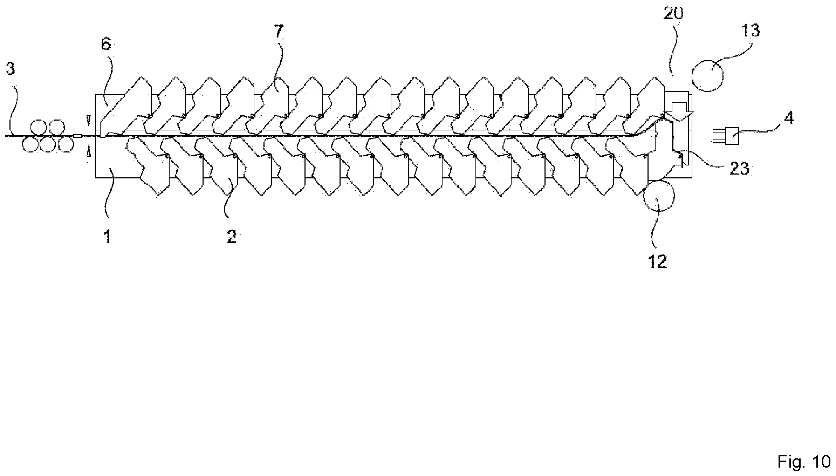

In den Fig. 9 und 10 ist eine weitere Anordnung für eine Vorrichtung zum Herstellen einer Biegung oder geometrischen Kontur einer Wellenwicklung für eine Spulenwicklung dargestellt.

Für gleiche Merkmale werden in den Fig. 9 und 10 dieselben Bezugszeichen wie in den Fig. 1 bis 8 verwendet. Endseitig der ersten und der zweiten Anordnung 1, 2 ist ein Startdrahtkonturgeber 20 vorgesehen, der ein erstes und zweites Konturgeberelement 21, 22 auf gegenüberliegenden Seiten des Drahtmaterials 3 aufweist, die am Beginn des Biegeprozesses aufeinander zubewegt werden, um eine Startdrahtkontur 23 endseitig auszubilden. Hierbei wird ein Ende 24 des Drahtmaterials 3 von der Greifeinrichtung 4 freigegeben.

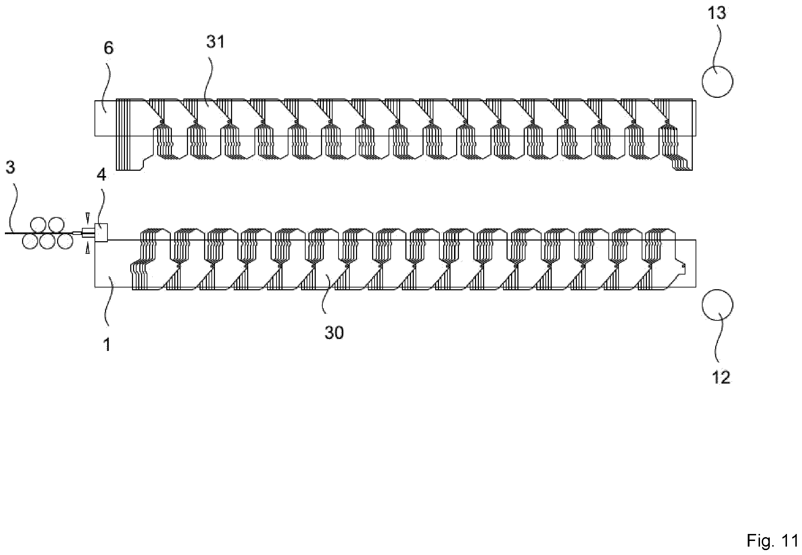

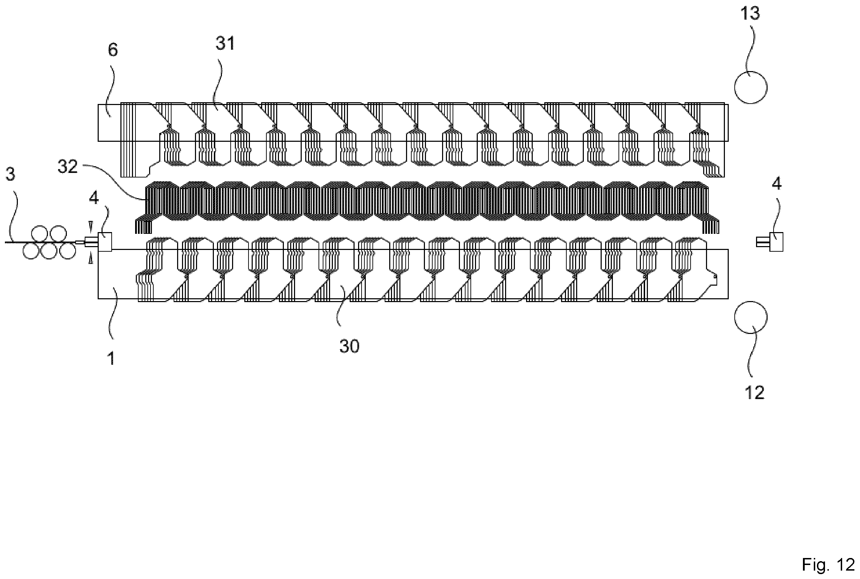

Die Fig. 11 und 12 zeigen eine andere Anordnung für eine Vorrichtung zum Herstellen einer Biegung einer Wellenwicklung für eine Spulenwicklung, bei der die erste und die zweite Anordnung 1, 2 mit mehreren übereinander gestapelten ersten und zweiten Biegeelementen 30, 31 gebildet sind, die es ermöglichen, mehrere Lagen 32 als jeweilige Biegung einer Wellenwicklung herzustellen.

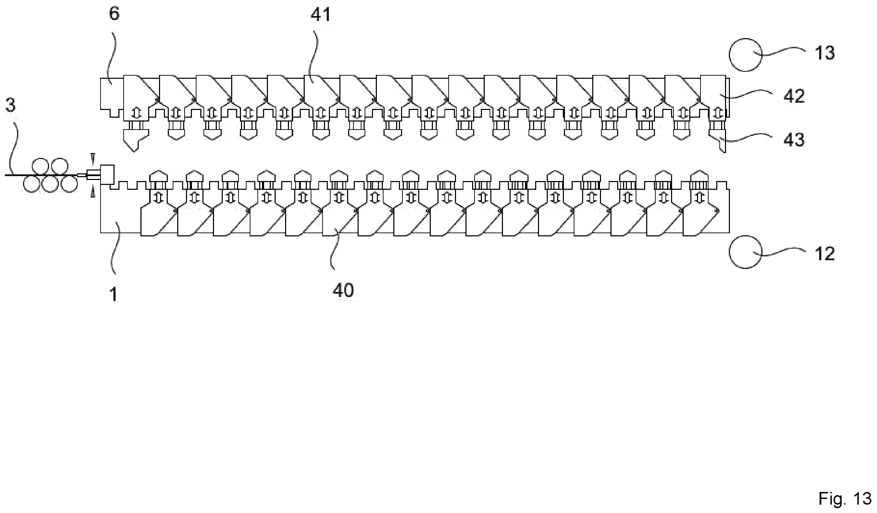

Fig. 13 zeigt eine schematische Darstellung einer zusätzlichen Anordnung für eine Vorrichtung zum Herstellen einer Biegung einer Wellenwicklung für eine Spulenwicklung, bei der die erste und die zweite Anordnung 1, 2 längenveränderbare erste und zweite Biegeelemente 40, 41 aufweisen, bei denen eine Längeneinstellung in Längsrichtung der Biegeelemente ermöglicht ist, indem eine Relativlage zwischen einem in Bezug auf die jeweilige Schwenkachse proximalen Bauteilabschnitt 42 und einem distalen Bauteilabschnitt 43 einstellbar ist, zum Beispiel unter Verwendung einer zugeordneten Linearführung am Biegeelement. Auf diese Weise kann die Anordnung für das Herstellen von Biegungen für eine Wellenwicklung mit unterschiedlicher Stranglänge eingerichtet sein.

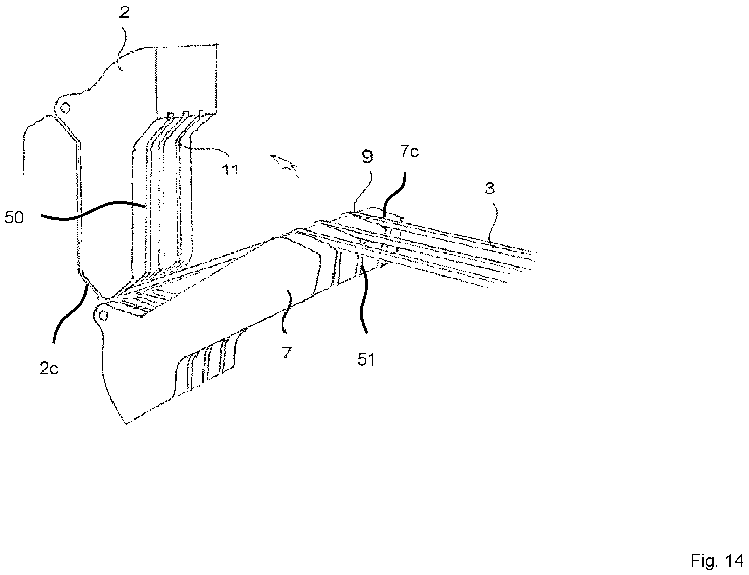

Fig. 14 zeigt eine schematische Darstellung eines ersten und eines zweiten Biegeelements 2, 7, bei denen im Seitenbereich 11 sowie im Bereich des jeweiligen Biegekopfs 2c, 7c Führungsvertiefungen 50, 51 ausgebildet sind, die beim Herstellen der Biegung zur Führung des Drahtmaterials 3 dienen.

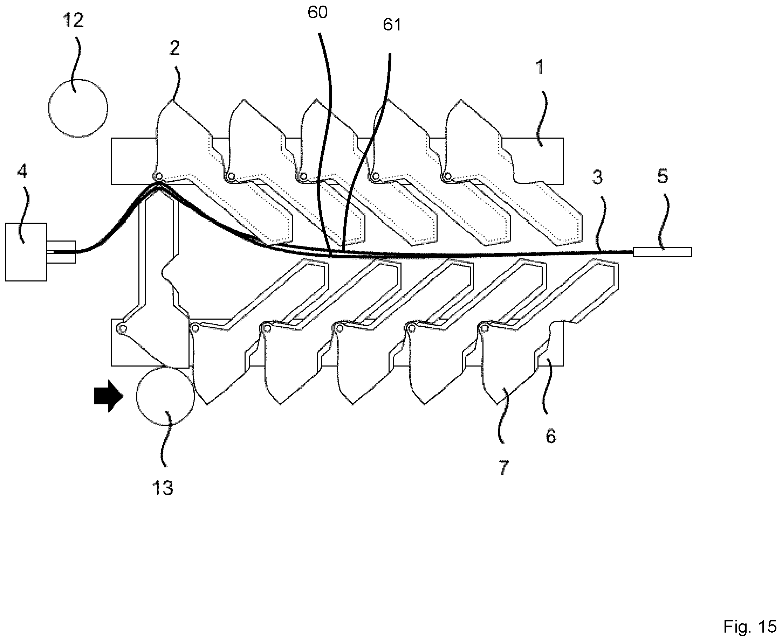

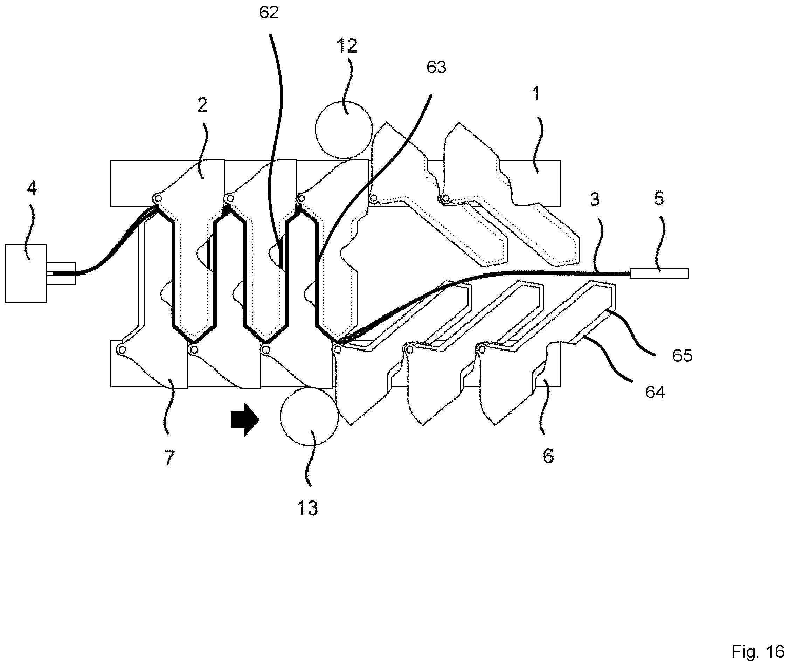

Die Fig. 15 bis 18 zeigen eine schematische Darstellung einer Anordnung für eine Vorrichtung zum Herstellen mehrerer Biegungen einer Wellenwicklung für eine Spulenwicklung einer elektrischen Maschine, wobei mehrere Drähte 60, 61 gleichzeitig gebogen werden, aber mit unterschiedlicher geometrischer Biegekontur. Für die gleichen Merkmale werden in den Fig. 15 bis 18 dieselben Merkmale wie in den vorangehenden Fig. 1 bis 14 verwendet.

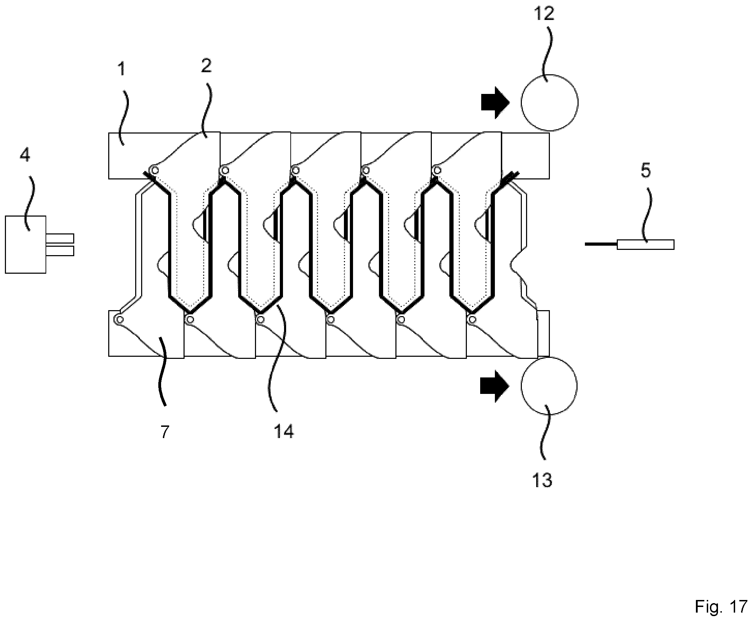

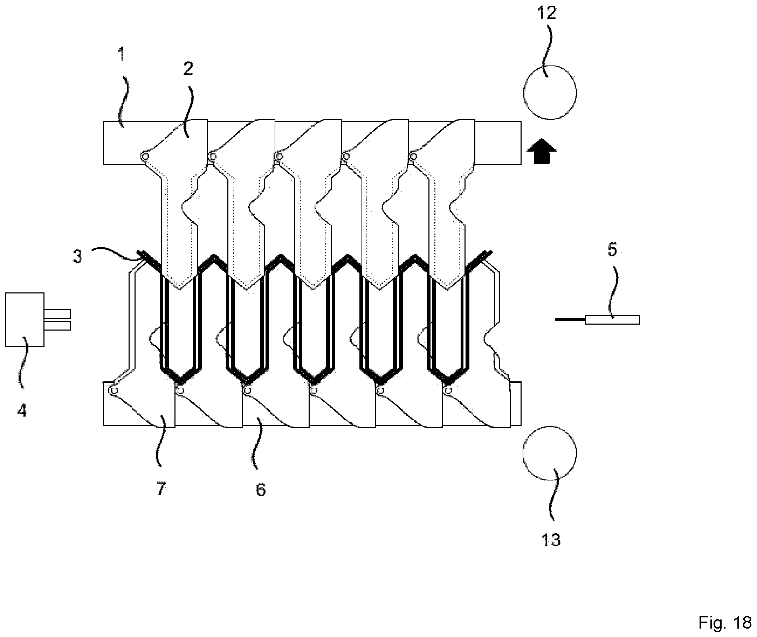

Die Drähte oder Drahtmaterialien 60, 61 werden vergleichbar dem Drahtmaterial 3 vor dem Biegen zwischen den ersten und den zweiten Biegeelementen 2, 7 angeordnet. Nach dem aufeinander Zustellen der ersten und der zweiten Biegeelemente 2, 7 werden diese dann nacheinander verschwenkt, um eine erste Biegung 62 sowie eine zweite Biegung 63 herzustellen, die mit unterschiedlicher geometrischer Kontur ausgebildet und mit Blick auf die Zeichenebene der Fig. 17 und 18 hinter- oder übereinanderliegend angeordnet sind. Schließlich werden die ersten Biegeelemente 2 zurückgefahren, um die erste und die zweite Biegung 62, 63 dann entnehmen zu können.

Bei dem Ausführungsbeispiel in den Fig. 15 bis 18 weisen die ersten und die zweiten Biegeelemente 2, 7 jeweils erste und zweite Biegekonturen 64, 65 auf, die einander zugeordnet sind und beim Biegen zusammenwirken, um die erste und die zweite Biegung 62, 63 mit unterschiedlicher geometrischer Kontur herzustellen.

## Patentansprüche

1. Vorrichtung zum Herstellen einer Biegung einer Wellenwicklung für eine Spulenwicklung einer elektrischen Maschine, mit:
- einer ersten Anordnung (1) erster Biegeelemente (2), die
- jeweils um eine erste Schwenkachse (2a) schwenkbar gelagert sind,
- jeweils einen in Bezug auf die erste Schwenkachse (2a) distalen ersten Biegekopf (2c) aufweisen und
- nach einem Einführen und vor einem Biegen eines Drahtmaterials (3) in Längsrichtung des Drahtmaterials (3) auf einer Seite des Drahtmaterials (3) in einer jeweiligen ersten Ausgangsstellung angeordnet sind; und
- einer zweiten Anordnung (6) zweiter Biegeelementen (7), die
- jeweils um eine zweite Schwenkachse (7a) schwenkbar gelagert sind,
- jeweils einen in Bezug auf die zweite Schwenkachse (7a) distalen zweiten Biegekopf (7c) aufweisen und
- nach dem Einführen und vor dem Biegen des Drahtmaterials (3) in Längsrichtung des Drahtmaterials (3) auf einer gegenüberliegenden Seite des Drahtmaterials (3) in einer jeweiligen zweiten Ausgangsstellung angeordnet sind;
wobei zum Herstellen einer Biegung einer Wellenwicklung für eine Spulenwicklung
- die ersten Biegeelemente (2) aus der ersten Ausgangsstellung von der einen Seite zum eingeführten Drahtmaterial (3) hin in eine erste Biegestellung schwenkbar sind,
- die zweiten Biegeelemente (7) aus der zweiten Ausgangsstellung von der gegenüberliegenden Seite zum eingeführten Drahtmaterial (3) hin in eine zweite Biegestellung schwenkbar sind und
- die ersten und die zweiten Biegeelemente (2, 7) nach dem jeweiligen Schwenken in die erste und die zweite Biegestellung in der Längsrichtung eine Anordnung benachbarter geschwenkter Biegeelementen ausbildend angeordnet sind, in welcher das zur Wellenwicklung gebogene Drahtmaterial um die ersten und die zweiten Biegeköpfe (2c, 7c) sowie zwischen benachbarten Biegeelementen verläuft.

2. Vorrichtung nach Anspruch 1, **dadurch gekennzeichnet, dass** zumindest eine der folgenden Ausgestaltungen ausgebildet ist:
- für die ersten Biegeelemente (2) der ersten Anordnung (1) ist ein erster Achsenabstand zwischen ersten Schwenkachsen benachbarter erster Biegeelemente gleichbleibend beim Verlagern der ersten Biegeelemente (2) aus der ersten Ausgangsstellung in die erste Biegestellung; und
- für die zweiten Biegeelemente (7) der zweiten Anordnung (6) ist ein zweiter Achsenabstand zwischen zweiten Schwenkachsen benachbarter zweiter Biegeelemente gleichbleibend beim Verlagern der zweiten Biegeelemente (7) aus der zweiten Ausgangsstellung in die zweite Biegestellung.

3. Vorrichtung nach Anspruch 1 oder 2, **dadurch gekennzeichnet, dass** in der Anordnung benachbarter geschwenkter Biegeelemente die ersten und die zweiten Biegeelemente (2, 7) abwechselnd angeordnet sind.

4. Vorrichtung nach mindestens einem der Ansprüche, **dadurch gekennzeichnet, dass** in der Anordnung benachbarter geschwenkter Biegeelemente die ersten und die zweiten Biegeelemente (2, 7) im Wesentlichen quer stehend zur Längsrichtung angeordnet sind.

5. Vorrichtung nach mindestens einem der Ansprüche, **dadurch gekennzeichnet, dass** die ersten und die zweiten Biegeelemente (2, 7) zum Verlagern aus der jeweiligen Biegestellung mittels einer Linearbewegung verlagerbar sind.

6. Vorrichtung nach mindestens einem der Ansprüche, **dadurch gekennzeichnet, dass** in der Anordnung benachbarter geschwenkter Biegeelemente einander gegenüberliegende Oberflächenabschnitte erster und zweiter Biegeelemente (2, 7) unter Einschluss eines dazwischenliegenden Drahtabschnitts (10) des Drahtmaterials (3) zumindest abschnittsweise formschlüssig anliegen.

7. Vorrichtung nach mindestens einem der Ansprüche, **dadurch gekennzeichnet, dass** das zur Wellenwicklung gebogene Drahtmaterial in der Anordnung benachbarter geschwenkter Biegeelemente in einem Drahtkanal (14) angeordnet ist, welcher entlang seiner gesamten Kanallänge in der Anordnung benachbarter geschwenkter Biegeelemente im Wesentlichen durchgehend von den ersten und den zweiten Biegeelementen (2, 7) begrenzt wird.

8. Vorrichtung nach mindestens einem der Ansprüche, **dadurch gekennzeichnet, dass** zum Nachbiegen des Drahtmaterials (3) zumindest die ersten Biegeköpfe (2c) der ersten Biegeelemente (2) mittels einer Linearbewegung in Längsrichtung des jeweiligen ersten Biegeelements (2) zum Drahtmaterial (3) hin verlagerbar sind.

9. Vorrichtung nach mindestens einem der Ansprüche, **dadurch gekennzeichnet, dass** eine erste Biegeelementlänge der ersten Biegeelemente (2) und / oder eine zweite Biegeelementlänge der zweiten Biegeelemente (7) einstellbar sind.

10. Vorrichtung nach mindestens einem der Ansprüche, **dadurch gekennzeichnet, dass**
- entlang der ersten Schwenkachsen (2a) jeweils mehrere erste Biegeelemente übereinander und um die zugeordnete erste Schwenkachse schwenkbar angeordnet sind und
- entlang der zweiten Schwenkachsen (7a) jeweils mehrere zweite Biegeelemente übereinander und um die zugeordnete zweite Schwenkachse schwenkbar angeordnet sind.

11. Vorrichtung nach mindestens einem der Ansprüche, **dadurch gekennzeichnet, dass** der ersten Anordnung (1) erster Biegeelemente (2) und der zweiten Anordnung (6) zweiter Biegeelemente (7) zumindest einseitig eine an die erste und die zweite Anordnung (1, 6) seitlich angrenzende und die flächig erfassende Deckplatte zugeordnet ist.

12. Vorrichtung nach mindestens einem der Ansprüche, **dadurch gekennzeichnet, dass** in Bezug auf die erste Anordnung (1) erster Biegeelemente (2) und die zweite Anordnung (6) zweiter Biegeelemente (7) endseitig ein Startdrahtkonturgeber (20) angeordnet ist, welcher eingerichtet ist, an dem Drahtmaterial (3) endseitig eine Startdrahtkontur (23) auszubilden und das Drahtmaterial (3) nach dem Einführen zu halten.

13. Verfahren zum Herstellen einer Biegung einer Wellenwicklung für eine Spulenwicklung einer elektrischen Maschine, mit:
- Bereitstellen einer Biegevorrichtung mit ersten Biegeelementen (2), die jeweils um eine erste Schwenkachse (2a) schwenkbar gelagert sind und einen in Bezug auf die erste Schwenkachse (2a) distalen ersten Biegekopf (2c) aufweisen und zweiten Biegeelementen (7), die jeweils um eine zweite Schwenkachse (7a) schwenkbar gelagert sind und einen in Bezug auf die zweite Schwenkachse (7a) distalen zweiten Biegekopf (7c) aufweisen;
- Einführen eines Drahtmaterials (3);
- Anordnen der ersten Biegeelemente (2) in Längsrichtung des Drahtmaterials (3) auf einer Seite des Drahtmaterials (3) in einer jeweiligen ersten Ausgangsstellung;
- Anordnen der zweiten Biegeelemente (7) in Längsrichtung des Drahtmaterials (3) auf einer gegenüberliegenden Seite des Drahtmaterials (3) in einer jeweiligen zweiten Ausgangsstellung und
- Herstellen einer Biegung einer Wellenwicklung für eine Spulenwicklung, aufweisend:
- Schwenken der ersten Biegeelemente (2) aus der ersten Ausgangsstellung von der einen Seite zum eingeführten Drahtmaterial (3) hin in eine erste Biegestellung und
- Schwenken der zweiten Biegeelemente (7) aus der zweiten Ausgangsstellung von der gegenüberliegenden Seite zum eingeführten Drahtmaterial (3) hin in eine zweite Biegestellung,
wobei mit den ersten und den zweiten Biegeelementen (2, 7) nach dem jeweiligen Schwenken in die erste und die zweite Biegestellung in der Längsrichtung eine Anordnung benachbarter geschwenkter Biegeelementen ausgebildet wird, in welcher das zur Wellenwicklung gebogene Drahtmaterial um die ersten und die zweiten Biegeköpfe (2c, 7c) sowie zwischen benachbarten Biegeelementen verläuft.

14. Verfahren nach Anspruch 13, **dadurch gekennzeichnet, dass** beim Schwenken der ersten Biegeelemente (2) in die erste Biegestellung und / oder beim Schwenken der zweiten Biegeelemente (7) in die zweite Biegestellung mittels der ersten und / oder der zweiten Biegeelemente (2, 7) weitere Abschnitte des Drahtmaterials (3) in einen Bereich zwischen den ersten und den zweiten Biegeelementen (2, 7) eingezogen und gebogen werden.

15. Verfahren nach Anspruch 13 oder 14, **dadurch gekennzeichnet, dass** beim Schwenken der ersten und der zweiten Biegeelemente (2, 7) das Drahtmaterial (3) zumindest im Bereich des jeweiligen ersten und zweiten Biegekopfes (2c, 7c) im Wesentlichen frei von einer Relativbewegung zwischen Abschnitten einer Biegekopfoberfläche und dem Drahtmaterial (3) gebogen wird, nachdem das Drahtmaterial (3) in einem jeweiligen Abschnitt der Biegekopfoberfläche zur Anlage kommt.

## Claims

1. Device for producing a bend of a wave winding for a coil winding of an electric machine comprising:
- a first arrangement (1) of first bending elements (2), which
- are each arranged to be pivotable about a first pivot axis (2a),
- each have a distal first bending head (2c) with respect to the first pivot axis (2a), and
- following an insertion and before a bending of the wire material (3) are arranged on one side of a wire material (3) in the longitudinal direction of the wire material (3) in a respective first starting position; and
- a second arrangement (6) of second bending elements (7), which
- are each arranged to be pivotable about a second pivot axis (7a),
- each have a distal second bending head (7c) with respect to the second pivot axis (7a), and
- following an insertion and before a bending of the wire material (3) are arranged on an opposite side of a wire material (3) in the longitudinal direction of the wire material (3) in a respective second starting position,
wherein for producing a bend of a wave winding for a coil winding.
- the first bending elements (2) can be pivoted out of the first starting position from the one side toward the inserted wire material (3) into a first bending position,
- the second bending elements (7) can be pivoted out of the second starting position from the opposite side toward the inserted wire material (3) into a second bending position,
- the first and the second bending elements (2, 7) are arranged, following the respective pivot into the first and second bending position, to form an arrangement of adjacent, pivoted bending elements in the longitudinal direction, in which arrangement the wire material bent into the wave winding runs around the first and the second bending heads (2c, 7c) and also between adjacent bending elements.

2. Device according to claim 1, **characterized in that** at least one of the following embodiments is formed:
- for the first bending elements (2) of the first arrangement (1), a first axis spacing between first pivot axes of adjacent first bending elements is constant during the displacement of the first bending elements (2) out of the first starting position into the first bending position; and
- for the second bending elements (7) of the second arrangement (6), a second axis spacing between second pivot axes of adjacent second bending elements is constant during the displacement of the second bending elements (7) out of the second starting position into the second bending position.

3. Device according to claim 1 or 2, **characterized in that** the first and the second bending elements (2, 7) are arranged alternating in the arrangement of adjacent, pivoted bending elements.

4. Device according to at least one of the claims, **characterized in that** the first and the second bending elements (2, 7) are arranged substantially perpendicular to the longitudinal direction in the arrangement of adjacent, pivoted bending elements.

5. Device according to at least one of the claims, **characterized in that** the first and the second bending elements (2, 7) can be displaced by means of a linear movement for displacement out of the respective bending position.

6. Device according to at least one of the claims, **characterized in that**, in the arrangement of adjacent, pivoted bending elements, mutually opposite surface sections of the first and second bending elements (2, 7), while enclosing a wire segment (10) of the wire material (3) lying therebetween, adjoin in a form-fitting way at least in sections.

7. Device according to at least one of the claims, **characterized in that**, in the arrangement of adjacent, pivoted bending elements, the wire material bent into the wave winding is arranged in a wire channel (14) which is substantially continuously delimited along its entire channel length in the arrangement of adjacent, pivoted bending elements by the first and second bending elements (2, 7).

8. Device according to at least one of the claims, **characterized in that**, for re-bending the wire material (3), at least the first bending heads (2c) of the first bending elements (2) can be displaced by means of a linear movement in the longitudinal direction of the respective first bending element (2) toward the wire material (3).

9. Device according to at least one of the claims, **characterized in that** a first bending element length of the first bending elements (2) and/or a second bending element length of the second bending elements (7) can be adjusted.

10. Device according to at least one of the claims, **characterized in that**
- multiple first bending elements are respectively arranged superposed and pivotable about the assigned first pivot axis along the first pivot axes (2a), and
- multiple second bending elements are respectively arranged superposed and pivotable about the assigned second pivot axis along the second pivot axes (7a).

11. Device according to at least one of the claims, **characterized in that** a cover plate, laterally adjacent to the first and second arrangement (1, 6) on at least one side and extensively covering the same, is assigned to the first arrangement (1) of first bending elements (2) and to the second arrangement (6) of second bending elements (7).

12. Device according to at least one of the claims, **characterized in that** a starting wire contour generator (20) is arranged on an end side with respect to the first arrangement (1) of first bending elements (2) and to the second arrangement (6) of second bending elements (7), and is configured to form a starting wire contour (23) on the wire material (3) at an end side, and to hold the wire material (3) following the insertion.

13. Method for producing a bend of a wave winding for a coil winding of an electric machine, comprising
- providing a bending device comprising first bending elements (2), which are each arranged to be pivotable about a first pivot axis (2a) and have a distal first bending head (2c) with respect to the first pivot axis (2a), and comprising second bending elements (7), which are each arranged to be pivotable about a second pivot axis (7a) and have a distal second bending head (7c) with respect to the second pivot axis (7a);
- inserting a wire material (3);
- arranging the first bending elements (2) on one side of the wire material (3) in the longitudinal direction of the wire material (3) in a respective first starting position;
- arranging the second bending elements (7) on an opposite side of the wire material (3) in the longitudinal direction of the wire material (3) in a respective second starting position; and
- producing a bend of a wave winding for a coil winding, comprising:
- pivoting the first bending elements (2) out of the first starting position from the one side toward the inserted wire material (3) into a first bending position, and
- pivoting the second bending elements (7) out of the second starting position from the opposite side toward the inserted wire material (3) into a second bending position,
wherein, following the respective pivot into the first and second bending positions, an arrangement of adjacent, pivoted bending elements is formed in the longitudinal direction using the first and second bending elements (2, 7), in which arrangement the wire material bent for the wave winding runs around the first and the second bending heads (2c, 7c) and also between adjacent bending elements.

14. Method according to claim 13, **characterized in that**, during the pivoting of the first bending elements (2) into the first bending position and/or during the pivoting of the second bending elements (7) into the second bending position, further sections of the wire material (3) are drawn in and bent in an area between the first and the second bending elements (2, 7) by means of the first and/or second bending elements (2, 7).

15. Method according to claim 13 or 14, **characterized in that**, during the pivoting of the first and the second bending elements (2, 7), the wire material (3), at least in the area of the respective first and second bending head (2c, 7c), is bent substantially free of a relative movement between sections of a bending head surface and the wire material (3), after the wire material (3) has come to rest in a respective section of the bending head surface.

## Revendications

1. Dispositif permettant la réalisation d'une pliage d'un enroulement ondulé pour un bobinage d'une machine électrique, avec :
- un premier agencement (1) de premiers éléments de pliage (2), qui
- sont respectivement logés pouvant pivoter autour d'un premier axe de pivotement (2a),
- comportent respectivement une première tête de pliage (2c) distale par rapport au premier axe de pivotement (2a), et
- sont disposés sur un côté du matériau en fil (3) dans une première position initiale respective après une introduction et avant un pliage d'un matériau en fil (3) dans une direction longitudinale du matériau en fil (3), et
- un deuxième agencement (6) de deuxièmes éléments de pliage (7), qui
- sont respectivement logés pouvant pivoter autour d'un deuxième axe de pivotement (7a),
- comportent respectivement une deuxième tête de pliage (7c) distale par rapport au deuxième axe de pivotement (7a), et
- sont disposés sur un côté opposé du matériau en fil (3) dans une deuxième position initiale respective après l'introduction et avant la pliage du matériau en fil (3) dans une direction longitudinale du matériau en fil (3),
sachant que pour réaliser un pliage d'un enroulement ondulé pour un bobinage
- les premiers éléments de pliage (2) peuvent être pivotés dans une première position de pliage de la première position initiale d'un côté vers le matériau en fil (3) introduit,
- les deuxièmes éléments de pliage (7) peuvent être pivotés dans une deuxième position de pliage de la deuxième position initiale du côté opposé vers le matériau en fil (3) introduit, et
- les premiers et les deuxièmes éléments de pliage (2, 7) sont disposés après le pivotement respectif dans la première et la deuxième position de pliage dans la direction longitudinale en constituant un agencement d'éléments de pliage pivotés voisins dans lequel le matériau en fil plié pour un enroulement ondulé passe autour des premières et deuxièmes têtes de pliage (2c, 7c) ainsi qu'entre les éléments de pliage voisins.

2. Dispositif selon la revendication 1, **caractérisé en ce qu'**au moins une des configurations suivantes est constituée :
- pour les premiers éléments de pliage (2) du premier agencement (1), un premier entraxe entre les premiers axes de pivotement des premiers éléments de pliage voisins est constant lors du déplacement des premiers éléments de pliage (2) de la première position initiale à la première position de pliage, et
- pour les deuxièmes éléments de pliage (7) du deuxième agencement (6), un deuxième entraxe entre les deuxièmes axes de pivotement des deuxièmes éléments de pliage voisins est constant lors du déplacement des deuxièmes éléments de pliage (7) de la deuxième position initiale à la deuxième position de pliage.

3. Dispositif selon la revendication 1 ou 2, **caractérisé en ce que** dans l'agencement des éléments de pliage pivotés voisins, les premiers et les deuxièmes éléments de pliage (2, 7) sont disposés en alternance.

4. Dispositif selon au moins l'une quelconque des revendications, **caractérisé en ce que** dans l'agencement des éléments de pliage pivotés voisins, les premiers et les deuxièmes éléments de pliage (2, 7) sont disposés pour l'essentiel transversalement, verticalement à la direction longitudinale.

5. Dispositif selon au moins l'une quelconque des revendications, **caractérisé en ce que** les premiers et les deuxièmes éléments de pliage (2, 7) peuvent être déplacés au moyen d'un mouvement linéaire pour un déplacement depuis la position de pliage respective.

6. Dispositif selon au moins l'une quelconque des revendications, **caractérisé en ce que** dans l'agencement des éléments de pliage pivotés voisins, des sections de surface opposées les unes aux autres des premiers et deuxièmes éléments de pliage (2, 7) s'appliquent au moins par endroits par conformité de forme en incluant une section de fil (10) intermédiaire du matériau en fil (3).

7. Dispositif selon au moins l'une quelconque des revendications, **caractérisé en ce que** pour l'enroulement ondulé du matériau en fil plié est disposé dans l'agencement des éléments de pliage pivotés voisins dans un conduit de fil (14), lequel est limité le long de toute sa longueur de conduit dans l'agencement des éléments de pliage pivotés voisins pour l'essentiel sans interruption depuis les premiers et les deuxièmes éléments de pliage (2, 7).

8. Dispositif selon au moins l'une quelconque des revendications, **caractérisé en ce qu'**au moins les premières têtes de pliage (2c) des premiers éléments de pliage (2) peuvent être déplacées au moyen d'un mouvement linéaire en direction longitudinale du premier élément de pliage respectif (2) vers le matériau en fil (3) pour replier le matériau en fil (3).

9. Dispositif selon au moins l'une quelconque des revendications, **caractérisé en ce qu'**une première longueur d'élément de pliage des premiers éléments de pliage (2) et/ou une deuxième longueur d'élément de pliage des deuxièmes éléments de pliage (7) peuvent être réglées.

10. Dispositif selon au moins l'une quelconque des revendications, **caractérisé en ce que**
- plusieurs premiers éléments de pliage sont respectivement disposés pouvant pivoter l'un sur l'autre le long des premiers axes de pivotement (2a) et autour du deuxième axe de pivotement attribué
et
- plusieurs deuxièmes éléments de pliage (7a) sont respectivement disposés pouvant pivoter l'un sur l'autre le long des deuxièmes axes de pivotement et autour du deuxième axe de pivotement attribué.

11. Dispositif selon au moins l'une quelconque des revendications, **caractérisé en ce qu'**au moins d'un côté une plaque de couverture avoisinant latéralement le premier et le deuxième agencement (1, 6) et saisissant ceux-ci en surface est attribuée au premier agencement (1) des premiers éléments de pliage (2) et au deuxième agencement (6) des deuxièmes éléments de pliage (7).

12. Dispositif selon au moins l'une quelconque des revendications, **caractérisé en ce qu'**un indicateur de profil de fil initial (20) est disposé en extrémité par rapport au premier agencement (1) des premiers éléments de pliage (2) et au deuxième agencement (6) des deuxièmes éléments de pliage (7), lequel est configuré pour constituer en finale sur le matériau en fil (3) un profil de fil initial (23) et maintenir le matériau en fil (3) après l'introduction.

13. Procédé permettant la réalisation d'un pliage d'un enroulement ondulé pour un bobinage d'une machine électrique, avec :
- mise à disposition d'un dispositif de pliage avec des premiers éléments de pliage (2), qui sont logés respectivement pouvant pivoter autour d'un premier axe de pivotement (2a) et comportent une première tête de pliage (2c) distale par rapport au premier axe de pivotement (2a) et des deuxièmes éléments de pliage (7), qui sont logés respectivement pouvant pivoter autour d'un deuxième axe de pivotement (7a) et comportent une deuxième tête de pliage (7c) distale par rapport au deuxième axe de pivotement (7a),
- introduction d'un matériau en fil (3),
- mise en place des premiers éléments de pliage (2) dans la direction longitudinale du matériau en fil (3) sur un côté du matériau en fil (3) dans une première position initiale respective,
- mise en place des deuxièmes éléments de pliage (7) dans la direction longitudinale du matériau en fil (3) sur un côté opposé du matériau en fil (3) dans une deuxième position initiale respective, et
- réalisation d'un pliage d'un enroulement ondulé pour un bobinage, comportant :
- pivotement des premiers éléments de pliage (2) de la première position initiale depuis un côté vers le matériau en fil (3) introduit dans une première position de pliage
et
- pivotement des deuxièmes éléments de pliage (7) de la deuxième position initiale depuis le côté opposé vers le matériau en fil (3) introduit dans une deuxième position de pliage,
sachant qu'avec les premiers et deuxièmes éléments de pliage (2, 7) après le pivotement respectif dans la première et la deuxième position de pliage dans la direction longitudinale, un agencement des éléments de pliage pivotés voisins est constitué dans lequel le matériau en fil plié pour l'enroulement ondulé passe autour des première et deuxième têtes de pliage (2c, 7c) ainsi qu'entre les éléments de pliage voisins.

14. Procédé selon la revendication 13, **caractérisé en ce que** lors du pivotement des premiers éléments de pliage (2) dans la première position de pliage et/ou lors du pivotement des deuxièmes éléments de pliage (7) dans la deuxième position de pliage au moyen des premiers et/ou deuxièmes éléments de pliage, (2, 7), d'autres sections du matériau en fil (3) sont insérées et pliées dans une zone entre les premiers et les deuxièmes éléments de pliage (2, 7).

15. Procédé selon la revendication 13 ou 14, **caractérisé en ce que** lors du pivotement des premiers et des deuxièmes éléments de pliage (2, 7), le matériau en fil (3) est plié au moins dans la zone de la première et de la deuxième tête de pliage (2c, 7c) respective pour l'essentiel libre d'un mouvement relatif entre les sections d'une surface de tête de pliage et le matériau de fil (3), une fois que le matériau en fil (3) vient en appui dans une section respective de la surface de tête de pliage.
